# EUROPEAN PATENT APPLICATION

(11) **EP 0 941 895 A2**
(43) Date of publication of application: **15.09.1999**
(21) Application number: 99500029.6
(22) Date of filing: 23.02.1999
(51) Int. Cl.: B60R 16/02

(54) **System for the transfer of binary information**

(30) Priority: 10.03.1998 ES 9800507
(71) Applicant: MECANISMOS AUXILIARES INDUSTRIALES S.A. M.A.I.S.A., E-43800 Valls, Tarragona (ES)
(72) Inventor: Fontanilles Pinas, Joan, 43800 Valls (Tarragona) (ES); Giro Roca, Jordi, 43800 Valls (Tarragona) (ES)
(74) Representative: Morgades y Manonelles, Juan Antonio

(57) **Abstract**

This system mainly applied in the automobile industry consists of sort of network where the different modules are interconnected through a only communication line the BUS, so these modules act as nodes with autodiagnosis capacity, being able as well to get connected to an outer checking equipment.

## Description

This application for a Patent of Invention, as its name indicates, consists of a "SYSTEM FOR THE TRANSFER OF BINARY INFORMATION", whose new characteristics of construction, shaping and design comply with the mission for which it has been specifically designed with maximum safety and efficacy.

More specifically, the invention refers to a system for the transfer of binary information in automobiles, using a single cable -which is also referred to as "BUS" in this technical sector- to communicate the different electrical and electronic components located in different parts of automobiles, usually grouped in small modules or boxes and commonly known as nodes.

There is a growing demand in the automobile industry for new electronic equipment for services and functions which will play an increasingly important role in the future. The usual practice is to group elements with different characteristics, i.e. headlights, direction indicators, constant or instantaneous actuator of the front windscreen wiper, front windscreen washer, rear window wiper, rear window washer, amongst others, in a single electronic module. The basis and foundation of this system which can be considered part of the state of the art, lies in the fact that whenever it is necessary to add a service, a new module must be added.

The system described in the previous paragraph has been replaced by that of integration, which makes it possible to reduce the number of modules to be connected, the size and the number of interconnection cables of the data network are reduced, and there is a substantial reduction in the number of circuits.

Data networks interconnect systems and permit the intercommunication between electronic modules, which act as the nodes of the network, through a communication line, the BUS.

Multiplexed electronic systems (all signals transmitted by a single cable or BUS) applied to the automobile offer countless potential benefits to end users, since they promote safety and provide the most convenient and useful features to automobiles.

The data network and the electronics allow an easier and less expensive manufacturing, driving and maintenance of an automobile.

Other additional advantages of integration are the fact that it makes it easier to reduce the number of nodes and the fact that it helps industry to deliver a quality, defect-free product to customers. This is due to the fact that the number of parts which may break and the number of interconnection circuits which may fail is minimized, which results in improved system reliability.

Reliability is an indispensable requirement in the automobile industry, when something fails, the aim is to repair it directly the first time, since this involves a reduction in repair costs. The multiplexing system in vehicles plays a very important role due to the self-diagnosis capability of nodes, these can detect whether the service is working perfectly, and allow also the technical services to dispose with a connection capability in order to check system performance, becoming in part a diagnosis tool.

The multiplexing system in vehicles is a useful technique to reduce many of the problems that automotive system engineers encounter, and it presents the following advantages:
· Reduction in wiring; number of circuits and cable section.
· Reduction in weight and ease of assembly.
· Reduction in vehicle system costs (on average).
· Diagnosis during manufacture and service.

Patent P.C.T./SE89/00123 describes the application of a "System for the transfer of binary information" to the electrical and electronic distribution system of automobiles, improving the same, referred to in the sector as EEDS, as well as to facilitate the integration of electronics, the architecture of an automobile's system is multiplexed by means of the said system in order to transfer binary information, which is hereby referred to as QWIK protocol, whose main features concerning the transfer of orders to different electrical and electronic components located in different electrical units (nodes), of an installation (system architecture) achieved through a single-cable BUS communication, permits a reduction in the actual number of cables of a steering column, door, instrument panel module and others, as well as a reduction in weight, since ultrathin cables, such as the BUS, can be used.

Those paths that are actually critical because of their reduced dimensions for allowing the passing of the wire bundles will not be critical for a single wire communication BUS as the one use by the multiplex network.

The QWIK protocol is suitable for automotive applications. QWIK is a cyclic protocol whereby nodes send information periodically. Each node has its own time slot allocated where it places the relevant message. The QWIK protocol does not use priority messages or checksums: instead, each message is repeated over and over. This periodic character is sufficient for its use in a number of automotive applications.

The object of the present invention is the application of this binary information transmission system to automobile.

Protocols commonly used in the automotive sector such as the so-called CAN, SAE 1850, and others, treat all signals in the automobile. The amount of information that these systems generate is extremely high and, therefore, they become very easily overloaded in spite of using a bus.

In order to have good tolerance to distortions, QWIK uses the entire arc between battery voltage and earth lead. Together with the 25-Kbps transmission rate, it generates little noise. Then, any electromagnetic interference is minimized and there is no restriction as to the location of the network in an automotive architecture which involves EMC-critical electronic equipment.

Paths which are currently critical for cable bundles will not be critical for a single-cable communication bus such as the one used in the multiplex network.

Most of these protocols are event-driven, i.e., nodes only broadcast when something has happened, and they have to inform other nodes of the event in question.

The efficiency of event-driven protocols may be improved by avoiding bus overloads. If used as the backbone (master network) of a system architecture, part of the signals is treated in a sub-network (a slave network), efficiency is higher if QWIK is used due to the fact that only signals addressed to other slave networks will be broadcast through the backbone bus.

The module signals themselves will be sent via the slave network bus. This makes it possible to use a different protocol for slave networks, which is more suitable according to the sub-network characteristics (dimensions, cost and others). Thus, for example, in the case of sub-networks which support low-end applications a system is improved when QWIK is used instead of CAN.

Conventionally, the whole architecture of a vehicle is made up of different modules, such as the steering column module, the door module, the instrument panel module. However, when an automobile module is multiplexed using the QWIK protocol, the only connection with the backbone is used for information necessary for the whole system, i.e., diagnosis information, thereby reducing the amount of information flowing through the backbone bus. The local nodes (QWIK nodes) of the module will share the information using the QWIK bus.

The way in which the networks are linked is as follows: a QWIK node is allocated in order to "hear" -in the relevant time slots- what is interesting to the backbone of the system and to insert bits into the record. After a reset signal, the QWIK node changes in its new role of data records. In this way, the backbone node can obtain from the records the information that the backbone network needs.

In terms of cost, QWIK nodes are cheaper than event-driven protocol nodes.

Other details and characteristics of this application for a Patent of Invention will become apparent by reading the description provided hereunder, where reference is made to the figures attached to this *abstract* which represent the details referred to. These details are given by way of example, referring to a possible case of a practical embodiment, but are not limited to the details expounded herein; this description may therefore be regarded as an illustrative point of view, with no type of limitation whatsoever.

The following is a detailed list of the different elements mentioned in this Invention Patent application, (1) left stalk switch, (2) right stalk switch, (3) steering wheel, (4) light control, (5) horn and window wiper, (6) intelligent service box, (7) left front lamps, (8) right front lamps, (9) left rear lamps, (10) right rear lamps.

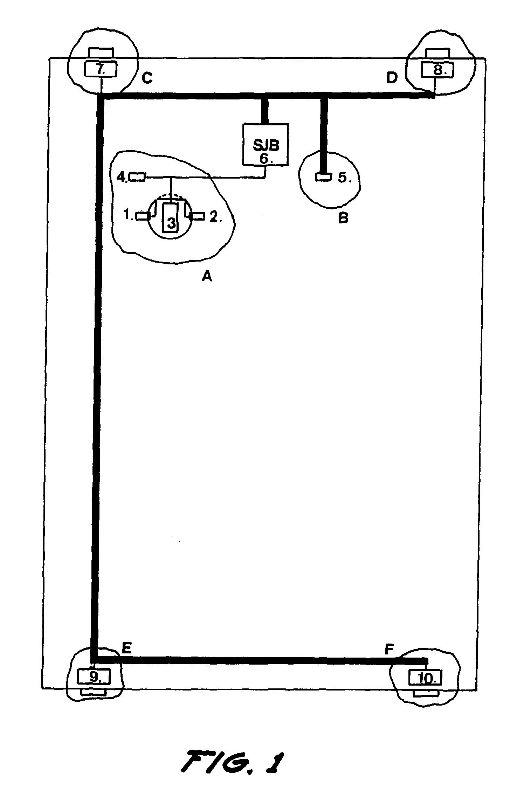

Figure no. 1 is a schematic representation of a main multiplexed network which uses a CAN system and different cells or sub-networks multiplexed using the QWIK system. In order to better understand the figure, both systems have been separated, using a thick line to represent the first system, and a thin line to represent the second.

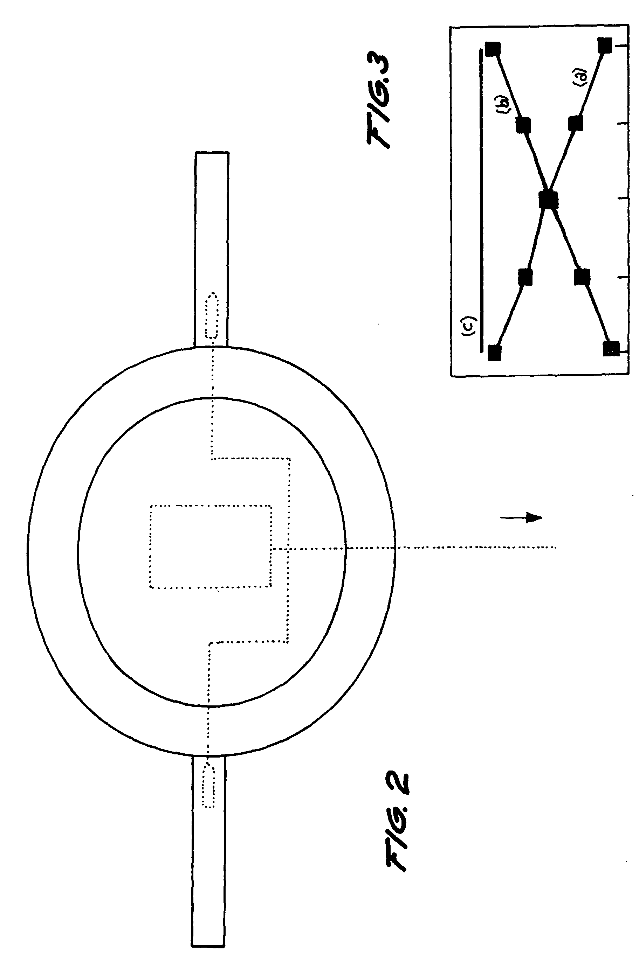

Figure no. 2 is a schematic representation of a steering column using a QWIK network. The nodes monitor the switches and broadcast the information to a receiving node in the service box.

Figure no. 3 is a diagrammatic comparison of the efficiency degree of the CAN and QWICK systems as a function of the number of nodes (graph line (a)), the length of the message (graph line (b)), being the ordinates axis the efficiency degree, and the other axis de nodes number and the length of the message, and the graph line (c) represents the efficiency degree for the QWICK system as a function of the nodes number and the lenght of the message.

In one of the preferred embodiments of the object of the present invention, and as can be seen from figure no. 1, different nodes are provided for in such a way that (1) represents the left stalk switch, (2) the right stalk switch, (3) the steering wheel, (4) the light control located on the instrument panel, (5) the horn and the window wiper, (6) the intelligent service box, (7) the left front lamps, (8) the right front lamps, (9) the left rear lamps, (10) the right rear lamps, which illustrate a preferred embodiment of the invention, QWIK cells marked with A will operate at 5v and output cells marked B to F, at 12v.

As can be seen in said figure no. 1, switching from a CAN system to a QWIK system in cells offers advantages because QWIK is more suitable for these low-end applications (interruption and load control) due, amongst others, to the following reasons:
- A QWIK protocol uses a single cable, while CAN protocols use two cables, a twisted pair, which results in lower automobile production costs. For very simple networks, such as sub-networks in automobiles, the use of a very low bit rate (QWIK 25 Kbps) in a single cable is a great advantage since it involves a low manufacturing cost. In order to increase the bit rate in simple networks -where this is not usually necessary- a twisted pair (CAN > 100 Kbps) is required to avoid electromagnetic interference.
- On the other hand, the QWIK protocol is so simple that, since bit rate is not too high, it is possible to have it running with programming in micro-processors. This is not possible with CAN. This is another cost benefit of QWIK.

For units such as the one shown in figure no. 1, where switches, lamps, and other elements can be found which require a single bit of information, it will always be possible to integrate the chip beforehand: the cost of the chip is lower. A lower bit rate means that electromagmnetic compatibility problems (EMC) become smaller and that communication can be implemented with simple standard micro-controllers. Given that the minimum length of a basic CAN configuration for one piece of one-bit information is 47 bits, the cost of integrating the chip is higher.
- Another issue to consider as far as communication systems for automobiles are concerned is that it should be possible to verify and guarantee the system's performance. Generally, this is difficult for CAN protocols. Testing is generally difficult, since the behaviour of a CAN system is of a non-deterministic nature and, thus, different testing routines will generate different results. It is only theoretically easy to verify and guarantee the behaviour of messages with top priorities. Lower priority messages are more difficult to verify. If new messages are added to a system it may be necessary to re-locate the message identifiers and verify the system over and over again. However, in purely cyclic systems such as QWIK, behaviour is easily verified. Thus, QWIK systems are easier to verify than CAN systems.
- Finally, and in terms of efficiency, it is possible the transmission of a greater amount of information with a QWIK system than with a CAN system. In basic CAN a single bit of information requires 47 bits; in QWIK, however, it can be sent as a single bit. The amount of useful information per second is higher. As can be seen in the diagram in figure no. 3, where the efficiency of both protocols is compared considering the length of the message and the number of nodes in the network, the thin line corresponds to the QWIK system, and the thick line to the CAN system.

Another example which helps to better explain the operating conditions and advantages provided by the use of the QWIK protocol in automotive applications can be observed in the improvement of a steering column module, this is a local multiplex application in dimensional paths which are critical for common wiring bundles.

The steering column Module, see figure no. 2, herein referred to as SMC, with ON/OFF signals. In this case, each signal input comes from one of the stalk switches, when a switch is closed, the associated input is set to Low ('0'GND) and the input is triggered, the SCM is connected via a QWIK bus to the Service Box.

When the system works without multiplexing, connection between the SCM and the Service Box is currently achieved with several cables. There is one cable for each position of each switch in the SCM and there are several switches ***there***. A small SCM system can be described as follows:

| **Location** | **Switch** | **Number of cables** |
|---|---|---|
| Steering wheel: | | |
| | Horn | 1 |
| | Hazard warning flasher | 1 |
| | Ignition key | 3 |
| Radio controls: | | |
| | Volume up | |
| | Volume down | |
| | Incremental search | |
| | Decremental search | |
| Left stalk switch: | | |
| Turn | signals: | 2 |
| | Right | |
| | Left | |
| Headlights: | | 3 |
| | High beam | |
| | Low beam | |
| | High beam flash | |
| Cruise control: | | 4 |
| | On/off switch | |
| | Continue | |
| | Increase speed | |
| | Reduce speed | |
| Right stalk switch: | | |
| | Windscreen/rear window wiper | 5 |
| | Windscreen wiper | |
| | Windscreen washer | |
| | Headlight washers | |
| | Rear window wiper | |
| | Rear window washer | |
| Power | Battery | 1 |
| | Earth lead | 1 |
| **Total** | | **25 cables** |

The same system can be constructed by using a few QWIK nodes in order to monitor switches and to broadcast information to a receiving node in the service box by only using 3 cables; battery, earth lead and signal, since there is almost no current flowing through the cables, these can be very thin, and by reducing the number of cables a greater reduction in space and weight is obtained.

Now that this Patent has been sufficiently described with reference to the attached drawings, it s understood that there may be introduced any modifications deemed necessary, provided that any variations introduced do not alter the essence of the patent which is summarized in the following claims.

## Claims

1. "SYSTEM FOR THE TRANSFER OF BINARY INFORMATION" for its application in electronic equipment intended for use in automobiles, whose object is to coordinate services and functions distributed inside an automobile and which consists of a set of interconnected modules, one module being provided for each service, characterised in that the said electronic equipment forms an architecture made up of electronic nodes which are intercommunicated by means of a single cable also known as BUS.

2. "SYSTEM FOR THE TRANSFER OF BINARY INFORMATION" according to the 1^{st} claim characterised in that the nodes send periodic information through the BUS.
